# EUROPEAN PATENT APPLICATION

(11) **EP 4 521 608 A1**
(43) Date of publication of application: **12.03.2025**
(21) Application number: 23195966.9
(22) Date of filing: 07.09.2023
(51) Int. Cl.: H02K 3/52, H02K 7/18

(54) **STATOR FOR A WIND TURBINE GENERATOR, GENERATOR AND WIND TURBINE**

(71) Applicant: Siemens Gamesa Renewable Energy A/S, 7330 Brande (DK)
(72) Inventor: Azar, Ziad, Sheffield S10 4ED (GB); Yusupov, Alisher, 7100 Vejle (DK)
(74) Representative: SGRE-Association

(57) **Abstract**

Stator for a wind turbine generator, comprising several phase windings (4) of at least two phases (U, V, W), which phase windings (4) are arranged in several winding segments (5), wherein each segment (5) has at least one output terminal (6, 7, 8) per phase (U, V, W), to which the respective phase windings (4) are connected and which output terminals (6, 7, 8) are connected to a busbar structure (18), characterized in that each output terminal comprises (6, 7, 8) a holder (11) attached to a stator structure (2) and a bar- or box- or plate-like connection terminal (14) connected to the holder (11) by at least one insulator element (13), wherein the connection terminal (14) comprises connection means to which flexible winding connection cables (9) connecting the respective phase winding (4) to the connection terminal (14) are connected, wherein for arranging the connection terminals (14) in different planes the holders (11) have different heights.

## Description

The invention refers to a stator for a wind turbine generator, comprising several phase windings of at least two phases, which phase windings are arranged in several winding segments, wherein each segment has at least one output terminal per phase, to which the respective phase windings are connected and which output terminals are connected to a busbar structure.

A stator for a wind turbine generator usually comprises a number of several phase windings assigned to at least two different phases, usually three different phases, which are commonly named U, V and W phases. The windings are arranged around the circumference of the stator. In case of a direct drive outer rotor generator, the stator is arranged within the rotor, so that the windings are arranged at the outer circumference of the stator. The windings are usually arranged in several winding segments, wherein each segment has at least one output terminal per phase. Each segment may have only one respective output terminal per phase, or may have several output terminals per phase. In known generators, these output terminals are realized by means of busbars, which have an arcuated design, and which are arranged around the circumference of the stator. The busbars are produced in an extensive rolling process, so that they receive the requested arcuated form. If for example three phases are realized a total number of six busbars is needed for realizing the output terminals of the three phases. The elongated, arcuated busbars are fixated in specific supports fixated to the generator structure. In such a support, all busbars realizing the respective output terminals are fixated together. As the busbars are arcuated and extended around the circumference, a number of such supports is needed for fixating the busbars along their length. The busbars are arranged as a stack, with one busbar lying over another busbar, separated by an insulation means.

The output terminals of the segments, i.e. the busbars are further connected to a busbar structure, which is arranged further to the inside of the windings and output terminal arrangement, and which usually extends around approximately a quadrant of the circular stator. The output terminals are connected by additional connection pieces usually also having a bar-like form. Each phase of an output terminal is connected to a respective phase-assigned busbar.

The busbars building the output terminals are usually impregnated using a vacuum pressure impregnation method, after they are installed at the stator structure. In case of a busbar failure, the phase functionality is lost, which would cause a complete or partial loss of this particular segment or phase. As the busbars are arranged in a stack, and as they are impregnated, it is very difficult to repair any failure in this area, as the generator needs to be completely run down and needs to be partially dismantled by removing the busbars in order to repair the failure. This is very elaborated and also very costly.

It is an object of the invention to provide a stator with a simplified design of the output terminals.

For addressing the object, a stator as depicted above is characterized in that each output terminal comprises a holder attached to a stator structure and a bar- or box- or plate-like connection terminal connected to the holder by at least one insulator element, wherein the connection terminal comprises connection means to which flexible winding connection cables connecting the respective phase winding to the connection terminal are connected, wherein for arranging the connection terminals in different planes the holders have different heights.

The inventive stator has a completely new design of its output terminals and their connection to the windings. Each output terminal associated to a specific phase is a separate arrangement, the output terminals assigned to the specific phases are not interconnected, as no busbars are used for realizing such an output terminal. Instead, each output terminal comprises a holder, which is attached to a stator structure. It further comprises a connection terminal, having a bar- or plate-like form or design, which is connected to the holder by at least one insulator element for electrically separating the connection terminal from the holder respectively the stator structure. The windings, which are assigned to the respective phase, are connected to the respective connection means provided at the connection terminal by means of flexible winding connection cables. Using these flexible winding connection cables allows for guiding the respective winding to the respective local connection terminal, to which it is connected, so that it is easy to connect all respective windings to the local, small connection terminal of the phase-assigned output terminal.

The output terminals assigned to the two or three respective phases are further designed such, that the holders have different heights, so that the connection terminals are finally arranged in different planes or different height levels. This allows for a simple connection to the busbar structure building the quadrant busbars, which, as mentioned, extend around the partial circumference and which can easily be arranged in the different heights or levels of the connection terminals allowing for a simple connection.

The inventive stator therefore shows a new flexible phase connection design, as it no longer uses any busbars comprising rolled and arcuated busbars extending partially along the circumference of the respective segment. Instead, only local output terminals comprising only a simple holder having a specific height, an insulation element and a connection terminal is needed for providing the respective output terminal associated to a respective phase. Therefore, no specific busbar arrangement or stack for realizing the output terminals is provided, what has for significant advantages. As no busbars are used for realizing the output terminals, no failures may occur based on busbar failures. Further, as no such busbar arrangement is used, there is much more space provided, which simplifies any maintenance work without the need of dismantling the generator respectively running the turbine down or with remarkably reduced downtime. Further, the open space allows for a better cooling, as cooling air may flow freely through this area. As no busbars are used, which are usually made of copper, the costs may significantly be lowered together with a reduction of the overall weight. The respective output terminals, which are, as mentioned, simplified in their design, are only locally arranged terminals, which therefore may be placed at any place of the segment, where it is appropriate, as the connection of the respective windings by the windings connection cables allow us for a simple connection of the respective windings wherever the respective output terminal is located. Further, the height of the output terminals can easily be adjusted by adjusting the height of the holder, so that the output terminals are also adaptable and scalable over various sizes, rates, topologies and/or applications respectively stator dimensions.

As mentioned, the output terminals are arranged only locally and comprise a bar- or plate-like connection terminal. This connection terminal has a longitudinal axis, which is preferably arranged under an angle of 45 - 135°, especially of 70 - 110°, and preferably radially to a central axis of the cylindrical stator. Each longitudinal connection terminal therefore is arranged radially or nearly radially, so that, in case of a direct drive generator, it extends from the windings arranged at the outside of the stator to the inside of the stator, where the busbar structure is provided. Such an arrangement of the connection terminals allows for a simplified guiding of the winding connection cables to the respective connection means of the connection terminal, and to further bridge the distance to the busbar structure.

As mentioned, the design of the output terminals is simplified, as they are only local and phase-specific terminals. One of the central elements of each output terminal is the holder, which, as mentioned, is adapted in its location and height to the requested height position of the busbar structure, to which the connection terminal shall be connected. Such a holder can be a U-shaped metal bracket. Such a simple steel bracket, which may be provided with respective attachment flanges at the sides for simply attaching or screwing the holder to the stator structure, are very simple mechanical mounting elements, simplifying the design and reducing the costs.

As mentioned, the connection terminal is connected to the holder by at least one insulator element, which may for example be made of ceramic or porcelain or any other suitable material providing the requested electrical insulation properties. The connection terminal may be directly attached to the insulator element for example by respective fixation screws. In an alternative, the carrier plate may be arranged on the at least one insulator element, to which carrier plate the connection terminal is attached, for example screwed.

The connection terminals are preferably made of copper, so that respective copper bars or copper plates are used. These bars or plates are provided with respective connection means like threaded bores or through holes, adapted to receive respective screw connections. Using copper terminals allows to conduct also a higher-voltage current density over the output terminal.

According to a further embodiment, the connection terminals comprise busbar connection means for connecting the respective connection terminal to a respective busbar of the busbar structure, wherein the busbar connection means are arranged at the radial inner side or end of the connection terminal. As mentioned, each connection terminal needs to be connected to the respective busbar of the busbar structure, which busbar is associated to the respective phase. The connection terminals are designed such, that a simplified connection is possible. To address this, the connection terminals comprise respective busbar connection means arranged at the radial inner side or the inner end of the bar- or plate-like connection terminal. As mentioned, at direct drive generators the busbar structure is arranged at the inner circumference of the stator structure. Providing the respective busbar connection means at the radial inner side or end of the connection terminal, they are exactly positioned in the path along which the busbars of the busbar structure extend, so that a simple connection is possible.

As mentioned, the output terminals are specifically associated to one specific phase. They are separate terminals, no interconnection is given. They may be placed at any position along the circumference of the respective segment. Preferably, the output terminals are arranged neighboring to each other, so that a kind of terminal arrangements spot or box is realized, where all the output terminals (for example two output terminals in case of two phases, three output terminals in case of three phases) are positioned. This is advantageous for maintenance purpose, as all the respective connections are at one spot.

Although the stator may be designed to have only two phases, the inventive stator preferably has more phase windings, like three phases or six phases, or a multi system of multi phases, for example two system with three phases each.

In addition to the stator, the invention also refers to a generator comprising a rotor and a stator as depicted above.

This generator is preferably a direct drive outer rotor generator for a direct drive wind turbine. Therefore, the stator is arranged inside of the rotor.

Finally, the invention also refers to a wind turbine, comprising such a generator.

Other objects and features of the present invention will become apparent from the following detailed description considered in conjunction with the accompanying drawings. The drawings, however, are only principle sketches designed solely for the purpose of illustration and do not limit the invention. The drawings show:
- fig. 1: a principal illustration in the form of a prospective view of a part of an inventive stator,
- fig. 2: the principal illustration of a part of the inventive stator of fig. 1 with the busbar structure,
- fig. 3: principal illustration of three different output terminals,
- fig. 4: a principal illustration of a part of an inventive stature with three output terminals comprising carrier plates,
- fig. 5: the principal illustration of another embodiment of output terminals, and
- fig. 6: a principal illustration of an inventive wind turbine having an inventive generator.

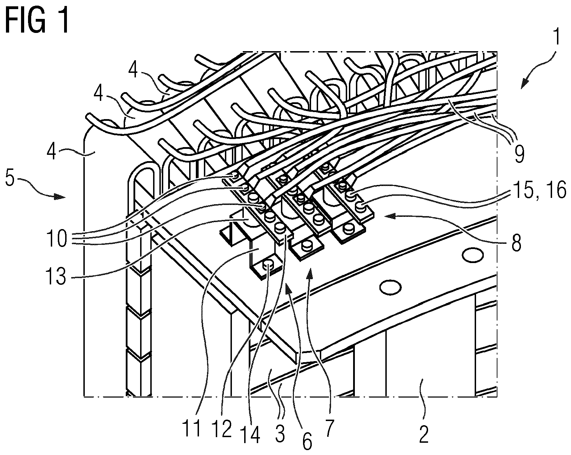

Fig. 1 shows a principal illustration of a part of an inventive stator 1, having a stator structure 2 comprising a number of metal stator elements 3, to which a number of windings 4, which are assigned to three different phases is attached. The usual set up of such a stator 1, which is adapted for a direct drive wind turbine generator, which generator additionally comprises a rotor surrounding the inner stator 1, is commonly known.

The phase windings 4 are preferably arranged in several winding segments 5, with one segment being shown in fig 1. The phase windings 4 are associated to three different phases U, V and W, wherein for each phase U, V and W a separate output terminal 6, 7 and 8 is provided. The output terminal 6 is associated to the U-phase, the output terminal 7 is associated to the V-phase and the output terminal 8 is associated to the W-phase. The respective phase windings 4, which are also associated to respective phases U, V and W, are connected to the respective output terminals 6, 7 and 8 by means of flexible winding connection cables 9, as shown in fig. 1. The phase windings 4, which are correlated to the U-phase, are all connected with respective connection cables 9 to the output terminal 6, the phase windings 4, which are correlated to the V-phase, or all connected with respective connection cables 9 to the output terminal 7, and the phase windings 4, which are correlated to the W-phase, are all connected with respective connection cables 9 to the output terminal 8. All these connections are realized by respective screw connections 10, as shown in fig. 1. These screw connections 10 are realized by means of respective screws connected to the respective output terminal, which comprises a number of connection means for receiving the respective screw connection 10.

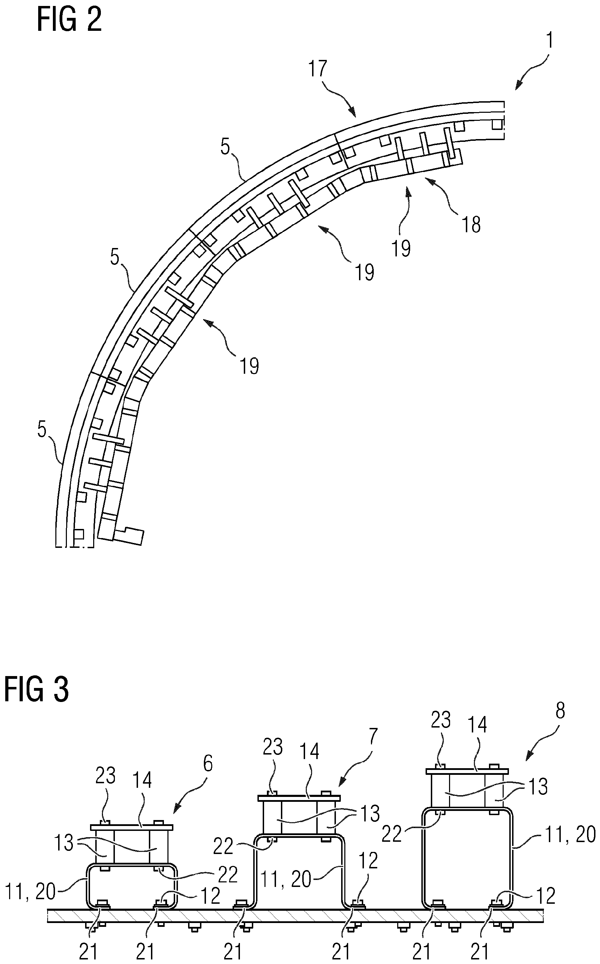

Each output terminal 6, 7 and 8 comprises a holder 11 realized in the form of a U-shaped metal bracket, which is attached to the stator structure 2 to by means of respective screw connections 12. Attached to the bracket-like holder 11 is at least one insulation element 13 made of an electrically insulating material like ceramic. To this insulation element 13 a bar-like connection terminal 14 is attached, which is made of copper and which extends almost radially to the centre axis of the stator 1, as shown in fig. 1. This bar-like connection terminal 14 is provided with the respective connection means in form of threaded bores or through holes receiving the screw connections 10, as shown in fig. 1. All output terminals 6, 7 and 8 have the same design and only differ in the respective dimensions of the holder 11, as will be described in connection with fig. 3.

Each connection terminal 14 comprises busbar connection means 15 for connecting the respective connection terminal 14 with a respective busbar of a busbar structure, an example of which is shown in fig. 2. The connection is also realized by means of respective screw connections 16.

Fig. 2 shows a quadrant 17 of the stator 1, which quadrant 17 comprises several segments 5. Each segment 5, as explained in connection with fig. 1, comprises a certain number of phase windings 4 associated to the three phases U, V and W, as explained. These phase windings 4 are not shown in fig. 2 for illustration purpose.

Fig. 2 shows the busbar structure 18, comprising busbar segments 19, associated to the respective segments 5. Each busbar segment comprises three separate busbars in form of elongated copper bars, which busbars are stacked above each other and are therefore arranged at different heights. As fig. 2 shows, the elongated busbar stacks of the busbar segments 19 extends close to the respective segment 5 at the inner circumference of the stator 1. One busbar of each busbar segment 19 is connected to one of the output terminals 6, 7 and 8 respectively the respective connection terminal 14 and its busbar connection means 15 by means of respective screw connections 16 as explained to fig. 1. Each busbar segment comprises three busbars. One busbar is correlated to one of the phases U, V and W. Therefore, the respective phases U, V and W from the phase windings 4 are finally connected to the respective busbar of the busbar segment 19. As shown, the busbar segments 19 are interconnected, meaning that the busbars of the busbar segments 19 correlated to the U-phase are all interconnected, the same is true for the busbars correlated to V-phase and the W-phase.

As mentioned, the busbars of the busbar segments 19 are stacked, they are therefore arranged in different heights or planes. As mentioned, also the holders 11 have different heights, therefore the connection terminals 14 of the output terminals 6, 7 and 8 are arranged in different heights, which correspond to the heights respectively levels of the busbars of the busbar segments 19, so that it is easy to connect the busbars to the output terminates 6, 7, 8.

From fig. 1 it is obvious, that all phase-correlated output terminals 6, 7 and 8 are only local devices, which are connected to the phase windings 4 by respective flexible connection cables 9. They do not comprise any kind of elongated and arcuated busbar stacks, as in the prior art, but only comprise the respective holder 11 with the insulator element 13 and the connection terminal 14 extending preferably in the radial direction and allowing for, first, a simple connection of the respective phase windings for, and, second, of the respective busbar of the associated busbar segment 19. It is obvious from fig. 1, that due to the local concentration of the three output terminals 6, 7 and 8 at one spot, any maintenance work is simplified, as all of the connection points are accessible at one spot. Further, there is a lot of free space, which was used in the prior art by the respective busbars, which can now be used for cooling purpose, as air may easily circulate through this open space. Further, any maintenance service also regarding the windings 4 etc. is simplified, also a weight and cost reduction is given, as no costly and heavy corporate busbars for realizing the output terminals is used.

Fig. 3 shows a principal illustration of the three output terminals 6, 7 and 8 associated to the three phases U, V and W as explained above. Each output terminals 6, 7 and 8 comprises a holder 11 realized in the form of a metal bracket 20 having terminal flanges 21 bent either to the inside or the outside and adapted to receive respective screw connections 12 as already explained. The brackets 20 are preferably made of steel. As fig. 3 clearly shows, the brackets 20 have different heights. The bracket 11 of the output terminal 6 is the lowest, the bracket 20 of the output terminal 7 is the middle, and the bracket 20 of the output terminal 8 is the highest.

To each bracket 20, the respective insulation elements 13 are attached, wherein in this embodiment two such insulation elements 13 are used per output terminals 6, 7 and 8. They are attached to the bracket 20 by means of respective screw connections 22. Finally, to the insulation elements 13 the respective connection terminal 14 is attached by respective screw connections 23, as shown in fig. 3. It is obvious, that, as the insulation elements 13 are all of the same length, the connection terminals 14 are in different heights respectively levels, corresponding to the different heights of the brackets 20. These different heights or levels corresponds to the heights respectively levels of the separate busbars of the busbar segments 19, as explained.

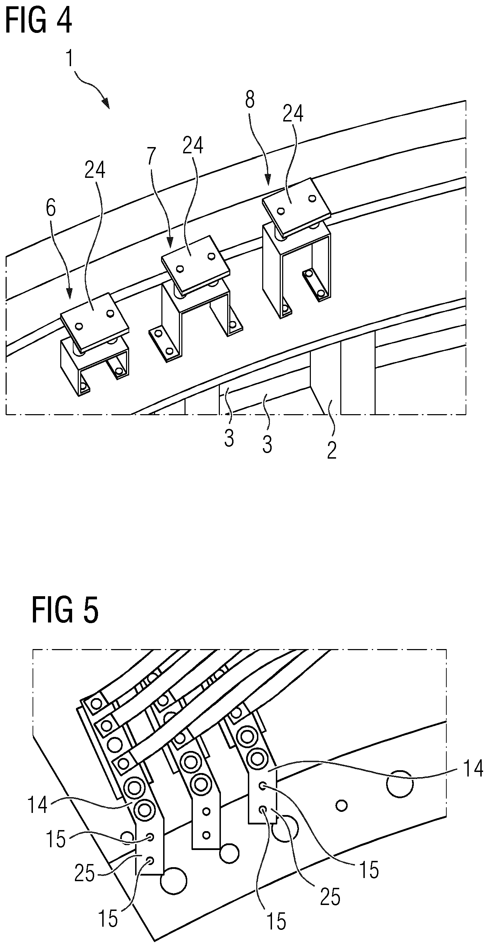

Fig. 4 shows a part of the stator 1, where only the stator structure 2 and the metal stator elements 3 are shown, but no phase windings 4. Instead, the three output terminals 6, 7 and 8 are shown. Their design corresponds to the design explained to fig. 4. Fig. 4 shows an additional carrier plate 24 attached to the respective insulation elements 13, which carrier plate 24 finally receives the connection terminated 14. This carrier plate 24 can be omitted, when the connection terminal 14 can be directly attached to the insulation elements 13.

Fig. 5 shows an embodiment of the connection terminals 14 having another example of a different shape than the ones shown in fig. 1, where the connection terminals 14 are longitudinal copper bars having the busbar connection means 15 at the inner end. The connection terminals 14 shown in fig. 5 are also elongated copper bars, but the inner ends 25 are slightly bent, so that the busbar connection means 15 are also slightly bend as shown in fig. 5.

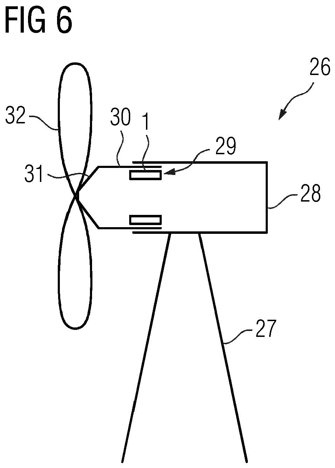

Finally, fig. 6 shows inventive wind turbine 26, having a tower 27, to which a nacelle 28 is mounted. Further an inventive generator 29 comprising an inner stator 1 according to the invention and an outer rotor 30 is shown. The rotor 30 is directly connected to a hub 31, to which several rotor blades 32 are connected. When the wind blows, it interacts with the rotor blades 32 making the hub 31 rotate, resulting in a rotation of the rotor 30 relative to the stationary stator 1, making the generator producing electric power.

Although the present invention has been described in detail with reference to the preferred embodiment, the present invention is not limited by the disclosed examples from which the skilled person is able to derive other variations without departing from the scope of the invention.

Independent of the grammatical term usage, individuals with male, female or other gender identities are included within the term.

## Claims

1. Stator for a wind turbine generator, comprising several phase windings (4) of at least two phases (U, V, W), which phase windings (4) are arranged in several winding segments (5), wherein each segment (5) has at least one output terminal (6, 7, 8) per phase (U, V, W), to which the respective phase windings (4) are connected and which output terminals (6, 7, 8) are connected to a busbar structure (18), **characterized in that** each output terminal comprises (6, 7, 8) a holder (11) attached to a stator structure (2) and a bar- or box- or plate-like connection terminal (14) connected to the holder (11) by at least one insulator element (13), wherein the connection terminal (14) comprises connection means to which flexible winding connection cables (9) connecting the respective phase winding (4) to the connection terminal (14) are connected, wherein for arranging the connection terminals (14) in different planes the holders (11) have different heights.

2. Stator according to claim 1, **characterized in that** the connection terminals (6, 7, 8) have a longitudinal axis arranged under an angle of 45 - 135°, more particular of 70 - 110°, and preferably radially to a central axis of the cylindrical stator (1).

3. Stator according to claim 1 or 2, **characterized in that** the holders (11) are U-shaped metal brackets (20).

4. Stator according to one of the preceding claims, **characterized in that** a carrier plate (24) is arranged on the insulator element (13), to which carrier plate (24) the connection terminal (14) is attached.

5. Stator according to one of the preceding claims, **characterized in that** the connection terminal (14) is a copper bar or plate.

6. Stator according to one of the preceding claims, **characterized in that** the connection terminals (14) comprise busbar connection means (15) for connecting the respective connection terminal (14) to a respective busbar of the busbar structure (18), wherein the busbar connection means (15) are arranged at the radial inner side or end of the connection terminal (14).

7. Stator according tom one of the preceding claims, **characterized in that** the output terminals (6, 7, 8) of the different phases (U, V, W) are arranged neighboring to each other .

8. Stator according to one of the preceding claims, **characterized in that** phase windings (4) of three phases (U, V, W), six phases or a multi system of multi phases are provided.

9. Generator comprising a rotor (30) and a stator (1) according to one of the preceding claims.

10. Generator according to claim 9, **characterized in** hat the stator (1) is arranged inside of the rotor (30).

11. Wind turbine, comprising a generator (29) according to claim 9 or 10.
